# EUROPÄISCHE PATENTSCHRIFT

(11) **EP 1 280 067 B1**
(45) Veröffentlichungstag und Bekanntmachung des Hinweises auf die Patenterteilung: **11.04.2007**
(21) Anmeldenummer: 02015313.6
(22) Anmeldetag: 10.07.2002
(51) Int. Cl.: G08G 1/09

(54) **Navigation und Informationssystem**
Navigation and informationsystem
Système de navigation et d'information

(30) Priorität: 26.07.2001 DE 10136439
(43) Veröffentlichungstag der Anmeldung: 29.01.2003
(73) Patentinhaber: ROBERT BOSCH GMBH, 70442 Stuttgart (DE)
(72) Erfinder: Schmidt, Heinrich, 31199 Diekholzen (DE); Höveling, Jörg, 31180 Giesen (DE); Hoffmann, Ralf, 31137 Hildesheim (DE)

(56) Entgegenhaltungen:
- EP-A- 0 987 665
- WO-A-00/20985
- WO-A-01/22249
- DE-A- 19 962 192
- US-A- 5 940 776
- US-A- 6 111 539

## Beschreibung

### Technisches Gebiet

Die vorliegende Erfindung betrifft ein vorzugsweise mindestens einem , Fortbewegungsmittel zugeordnetes Informationssystem, insbesondere Navigationssystem, wie es beispielsweise in Fortbewegungsmitteln, etwa in Fahrzeugen, in Flugzeugen, in Kraftfahrzeugen oder in Schiffen, zum Einsatz gelangt.

### Stand der Technik

In Bezug auf derartige konventionelle Informationssysteme ist zu bedenken, dass diese heutzutage die Möglichkeit haben, Informationen sowohl in Textform als auch in Symbolform in einer Karte darzustellen. Zur Zeit dient diese Fähigkeit - jedenfalls bei Rundfunkempfangsgeräten oder bei Navigationsgeräten - jedoch vor allem dazu, Verkehrsmeldungen auf TMC-Basis (TMC = Traffic Message Channel = Kanal für Verkehrsdurchsagen = Verkehrsfunkkanal mit automatisierter Erfassung der Verkehrslage und mit Aufbereitung entsprechender Verkehrsmeldungen) mittels RDS-Technik (RDS = Radio Data System = Radio-Daten-System) und/oder mittels GSM-Technik (GSM = Global System for Mobile Communication) sowie statische Daten, wie etwa sogenannte "Points of Interest" (POI), das heißt Flughäfen, Tankstellen, Werkstätten oder dergleichen, in Abhängigkeit vom System als Text oder als Symbol anzuzeigen.

Daneben ist aus der Druckschrift EP-A-0 987 665 ein Navigationssystem bekannt, das den Fahrer mittels eines am Bildschirm des Navigationssystems angezeigten Symbols auf wetterbedingte gefährliche Straßenverhältnisse aufmerksam macht.

Die Druckschrift US-A-6 111 539 offenbart ein Navigationssystem, das dazu ausgelegt ist, Daten auf Basis des GPRS-Standards (GPRS = General Packet Radio Service) und/oder des GSM-Standards (GSM = Global System for Mobile Communication) zu übertragen.

Bei der Übertragung von Verkehrsmeldungen auf TMC-Basis belegen die im Radio-Daten-System (RDS) gemäß TMC-Standard übertragenen Verkehrsinformationen, dass es trotz der beschränkten Datenkapazität von weniger als 300 Bit pro Sekunde möglich ist, aktuelle Informationen auf diesem Wege verfügbar zu machen.

Neben den Verkehrsinformationen ist als regelmäßiger Bestandteil der verlesenen Nachrichten auch der Wetterbericht für viele Nutzer von gesteigerter Bedeutung. Die Wiedergabe einer Wettervorhersage gewissermaßen "auf Knopfdruck" ist daher aus Sicht des Nutzers eine besonders erstrebenswerte Funktion.

So ist beispielsweise aus der Druckschrift DE-A-199 62 192 ein Informationssystem zum Empfangen von Wetterdaten und -informationen bekannt. Dieses Informationssystem ermöglicht es, Wetterdaten aus dem Internet abzurufen und derart umzuformatieren, dass diese Wetterdaten mittels einer drahtlosen Vorrichtung, zum Beispiel auf einem Mobiltelephon, empfangen werden können.

Allerdings hat es sich bislang nicht als möglich erwiesen, die Wiedergabe einer Wettervorhersage gewissermaßen "auf Knopfdruck" auf Basis des RDS-Systems zu realisieren. Ursachen sind insbesondere darin zu sehen, dass in der Regel sowohl die Meldungsquellen (Polizei, Wetterdienst) als auch die Eigenschaften (z.B. Vorhersagezeiträume, Detaillierung, Aktualitätsbedarf) für Verkehrs- und Wetterinformationen unterschiedlich sind.

### Darstellung der Erfindung: Aufgabe, Lösung, Vorteile

Ausgehend von den vorgenannten Nachteilen und Unzulänglichkeiten liegt der vorliegenden Erfindung die Aufgabe zugrunde, ein Informationssystem sowie ein Verfahren zum Betreiben mindestens einer mindestens einem Informationssystem zugeordneten Empfangseinheit bereitzustellen, bei denen auf Basis des RDS-Systems die Wiedergabe einer Wettervorhersage gewissermaßen "auf Knopfdruck" technisch realisierbar ist, so dass die dann im Informationssystem vorhandenen Daten sinnvollerweise für Anzeigezwecke, im Bedarfsfalle auch für Navigationszwecke, genutzt werden können.

In diesem Zusammenhang zielt die vorliegende Erfindung des weiteren darauf ab, ein Informationssystem sowie ein Verfahren zum Betreiben mindestens einer mindestens einem Informationssystem zugeordneten Empfangseinheit zur Verfügung zu stellen, das trotz der Implementierung dieser Kriterien erschwinglich bleibt und dessen Funktionalität sich gut mit der Funktionalität bereits bestehender Informationssysteme ergänzt.

Diese Aufgabe wird gemäß der Lehre der vorliegenden Erfindung durch ein Informationssystem mit den im Anspruch 1 genannten Merkmalen gelöst. Vorteilhafte Ausgestaltungen und zweckmäßige Weiterbildungen der vorliegenden Erfindung sind in den Unteransprüchen gekennzeichnet.

Mithin ist der erfindungswesentliche Kern in dem Kriterium zu sehen, daß - ähnlich wie beim als sogenannte ODA-Applikation (ODA = Open Data Application) ausgebildeten Verkehrsfunkkanal mit automatisierter Erfassung der Verkehrslage und mit Aufbereitung entsprechender Verkehrsmeldungen (--> TMC = Traffic Message Channel = Kanal für Verkehrsdurchsagen) - auch die Wetterdaten und -informationen als ODA-Applikation im RDS-System übertragen werden können; hierbei kann diese ODA-Applikation beispielsweise als sogenannter "Wettermitteilungsdienst" (= WMC = Weather Message Channel) bezeichnet werden, so daß die insbesondere aktuellen Wettermeldungen in der Empfangseinheit jederzeit abrufbar vorgehalten werden können.

In diesem Zusammenhang zeichnet sich eine ODA-Applikation, etwa gemäß der internationalen Standardnorm ISO 8613, unter anderem dadurch aus, daß jedes Dokument einer vordefinierten Dokumentenklasse angehört, wobei eine Dokumentenklasse eine generische logische Struktur, nämlich Objektklassen und Zusammensetzungsregeln enthält.

In diesem Zusammenhang bedeutet eine generische Layoutstruktur eine ungefähre Beschreibung der Seitenstrukturen, wobei die verschiedenen Stile durch die Layoutanweisungen, durch Darstellungsattribute für die Objekte und durch die Inhaltsformatierung gegeben sind. Bei der Dokumentenerstellung erzeugt der Benutzer dann eine dokumentenklassenkonforme spezifische logische Struktur und füllt diese mit Inhaltsinformationen; der Formatierer erzeugt daraus automatisch mittels der generischen Layoutstruktur und der Stile der Dokumentenklasse die spezifische Layoutstruktur.

In bezug auf den Gegenstand der vorliegenden Erfindung ist nun zu berücksichtigen, daß auch konventionellerweise Wetterdaten und -informationen theoretisch mittels RDS/TMC übertragen werden können; jedoch ist dieses Merkmal bislang nicht genutzt worden, weil zum einen die Datenquellen für Verkehrsmeldungen (--> Polizei) und für Wettermeldungen (--> Wetterdienst) verschieden sind und zum anderen das TMC-Prinzip ereignisorientiert ist, wohingegen Wettermeldungen statusorientiert sind; demzufolge sind konventionellerweise in TMC auch nur Meldungen zu finden, die Ereignisse oder Gefahren für den Verkehr erwarten lassen, wie etwa Nebel oder starker Schneefall.

Mit dem Prinzip gemäß der vorliegenden Erfindung, das heißt mit einem speziellen ODA-Dienst auf WMC-Basis führen nun diese Unterscheidungen nicht mehr zu Problemen. In diesem Zusammenhang wird der Fachmann insbesondere zu schätzen wissen, daß die Kodierung nicht geändert werden muß, das heißt daß die Orts- und Ereignislisten sowie das Meldungsmanagement gemäß dem ALERT-C-Protokoll (ALERT = Advice and problem Location for European Road Traffic) unverändert auch für den "Wettermitteilungsdienst" (= WMC = Weather Message Channel) anwendbar sind.

Hierbei wirkt es sich für die vorliegende Erfindung als günstig aus, daß das ALERT-C-Protokoll als festgelegtes Protokoll zum Transport der Meldungen von der Erfassung bis zum Funkhaus genau auf die RDS-Übertragung zugeschnitten ist. Es werden komprimierte Informationen im neutralen Datenformat übertragen, sozusagen Adressen, die in der Empfangseinheit gemäß der vorliegenden Erfindung dann in die Landessprache expandiert werden; die Ausgabe kann dann auf Papier, auf einem Display oder auf einem Vocoder erfolgen.

Damit sind erfindungswesentliche Voraussetzungen erfüllt, um nicht nur den Verkehrsfunk, sondern auch die Wetterdaten und -informationen zu individualisieren. Die Empfangseinheiten können - bei Vorliegen entsprechend großer Speicher - routenrelevante Meldungen aus einer Datenbank suchen und beispielsweise dem Führer eines Fortbewegungsmittels auf Knopfdruck in seiner Muttersprache mitteilen.

Im Ergebnis wird durch die Nutzung von ALERT-C für die Kodierung mithin die WMC-Meldung sprachunabhängig, so daß der Nutzer der vorliegenden Erfindung den Wetterbericht beispielsweise auch bei Reisen im Ausland in seiner Muttersprache erhält.

Ein weiterer Nutzen der vorliegenden Erfindung ist im Verbinden von automatisierter Wetterdatenerfassung, wie etwa von Niederschlagsmenge, von Temperatur, von Windgeschwindigkeit oder von dergleichen, mit einer automatischen Umwandlung in WMC-Meldungen zu sehen. Durch dieses Verbinden lassen sich Kosten für das Aufbereiten der Meldungen senken; des weiteren kann hierdurch gleichzeitig die Aktualität der Meldungen erhöht werden.

Eine erfindungswesentliche Eigenschaft des vorliegenden Gegenstands besteht nun darin, daß als sogenannte "Locationcodes" gerade die beim TMC-Prinzip selten genutzten Gebiete relevant sind. Die Vorhersagen sollten sich hierbei auf administrative Gebiete, wie etwa Bundesländer, Regierungsbezirke oder dergleichen, aber auch auf vorhandene touristische Großräume, wie etwa den Bayerischen Wald oder die Lüneburger Heide, beziehen.

Als Ergebnis ist die für das WMC-Prinzip gemäß der vorliegenden Erfindung benötigte Teilmenge der Ortsliste regelmäßig sehr klein, etwa von der Größenordnung hundert Einträge, so daß spezielle Datenträger für die Nutzung des WMC-Prinzips problemlos mehrere solcher spezialisierter, das heißt an das WMC-Prinzip angepaßter Ortslisten umfassen können (so kann sich der Umfang etwa auf alle Staaten Europas erstrecken).

Eine ähnliche Situation findet sich bei der Ereignisliste, bei der auch lediglich eine kleine Untermenge aller vorhandenen Ereignisse für den WMC benötigt wird. Als Folge sind die für eine Sprachausgabe benötigten Datenmengen im Vergleich zum TMC-Prinzip sehr viel geringer, was zu reduzierten Kosten auf der Endgeräteseite, insbesondere hinsichtlich der Empfangseinheit, führt. Für kombinierte TMC-/WMC-Empfangseinheiten bedeutet dies, daß der Mehraufwand für das Implementieren von WMC gegenüber TMC gering ist.

Eine Erweiterung des Informationssystems gemäß der vorliegenden Erfindung ist insoweit möglich, als bei einer bevorzugten Ausbildung des Informationssystems als Navigationssystem bei der Routenberechnung zweckmäßigerweise die aktuelle Wetterlage Berücksichtigung finden kann. So können etwa Gebiete, die gerade überschwemmt oder eingeschneit sind oder sonstige Gefahrenquellen, wie etwa Großfeuer oder Tornados in den USA, beinhalten, umfahren werden. Der Vorteil für den Benutzer ist hier unter anderem darin zu sehen, daß schon bei der Anreise aktuelle Wetterdaten und -informationen des Zielgebiets abgefragt und in Unwettersituationen bestimmte Bereiche zielgerichtet gemieden werden können.

Auch im stationären Geräten (z.B. Heimempfänger) sind Vorteile gegenüber den bislang üblichen (gesprochenen) Wettermeldungen gegeben. So könne z.B. für die Umgebung die Wetterprognosen in mehreren Zeiträumen vorliegen (z.B. aktuell; einige Stunden; nächster Tag; etc.) Dies würde z.B. (hohe Qualität der Prognosen vorausgesetzt) in der Landwirtschaft die Bestimmung des optimalen Zeitpunktes für Ernte oder Düngung ermöglichen. Ein entsprechender Empfänger könnte auch die jeweils aktuellen Daten über einen längeren Zeitraum speichern, und so für weitergehenden Auswertungen oder Statistiken zur Verfügung stellen.

Ein erfindungsgemäßes Verfahren zum Betreiben mindestens einer mindestens einem erfindungsgemäßen Informationssystem zugeordneten Empfangseinheit zum Empfangen von statusorientierten Daten, insbesondere von auf das Wetter bezogenen Wetterdaten und -informationen, weist die folgenden Schritte auf:
(i) Starten und
   Gehen zu Schritt (ii);
(ii) Initialisieren und
   Gehen zu Schritt (iii);
(iii) Aktivieren des Empfangens von statusorientierten Daten, insbesondere von auf das Wetter bezogenen Wetterdaten und -informationen:
   - wenn ja (+), dann Gehen zu Schritt (iv);
   - wenn nein (-), dann Gehen zu Schritt (x);
(iv) Suchen mindestens eines dem Empfangen von statusorientierten Daten, insbesondere von auf das Wetter bezogenen Wetterdaten und -informationen, zugeordneten Gruppentyps, insbesondere RDS-Gruppentyps (RDS = Radio Data System = Radio-Daten-System) und
   Gehen zu Schritt (v);
(v) Finden eines dem Empfangen von statusorientierten Daten, insbesondere von auf das Wetter bezogenen Wetterdaten und -informationen, zugeordneten Gruppentyps, insbesondere RDS-Gruppentyps, mit zutreffender Anwendungskennung (AID = Application Identification):
   - wenn ja (+), dann Gehen zu Schritt (vi);
   - wenn nein (-), dann
(xii) Deaktivieren des Empfangens von statusorientierten Daten, insbesondere von auf das Wetter bezogenen Wetterdaten und -informationen und
   Gehen zu Schritt (x);
(vi) Anzeigen mindestens eines/r statusorientierten Daten, insbesondere auf das Wetter bezogenen Wetterdaten und -informationen, zugeordneten Textes, Tabelle, Graphik, Symbols oder dergleichen in der Ausgabeeinheit und
   Gehen zu Schritt (vii);
(vii) Sammeln von statusorientierten Meldungen, insbesondere von auf das Wetter bezogenen Wettermeldungen und
   Gehen zu Schritt (viii);
(viii) Abrufen der statusorientierten Meldungen:
   - wenn ja (+), dann
(xiii) Anzeigen der statusorientierten Daten, insbesondere der auf das Wetter bezogenen Wetterdaten und -informationen, in der Ausgabeeinheit und
   Gehen zu Schritt (ix);
   - wenn nein (-), dann Gehen zu Schritt (ix);
(ix) Wechseln des Senders:
   - wenn ja (+), dann Gehen vor Schritt (iv);
   - wenn nein (-), dann Gehen zu Schritt (x);
(x) Empfangen von statusorientierten Daten, insbesondere von auf das Wetter bezogenen Wetterdaten und -informationen, noch im Aktivierungszustand:
   - wenn ja (+), dann Gehen vor Schritt (vii);
   - wenn nein (-), dann Gehen zu Schritt (xi);
(xi) Beenden.

Vorteilhafterweise wird vorgesehen, daß der Schritt des Initialisierens
(ii.1) ein Auslesen der LCL-Kennung oder dergleichen;
(ii.2) ein Scannen des frequenzmodulierten Bandes;
(ii.3) ein Suchen eines Gruppentyps, insbesondere eines RDS-Gruppentyps
aufweist.

### Kurze Beschreibung der Zeichnungen

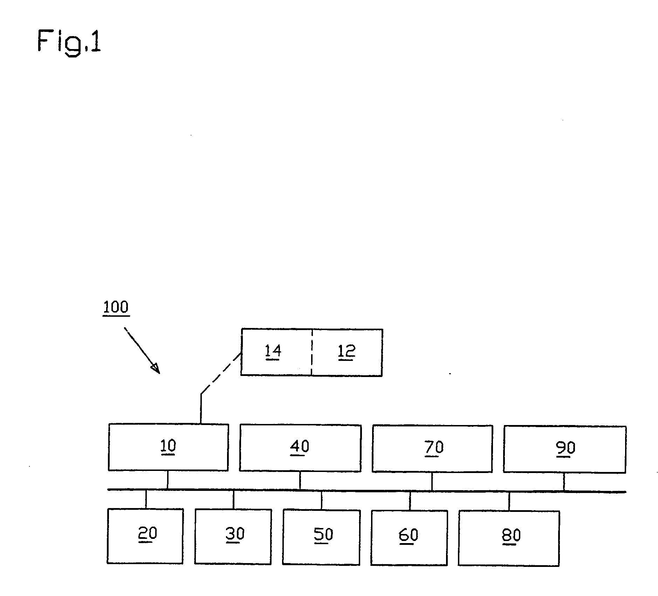

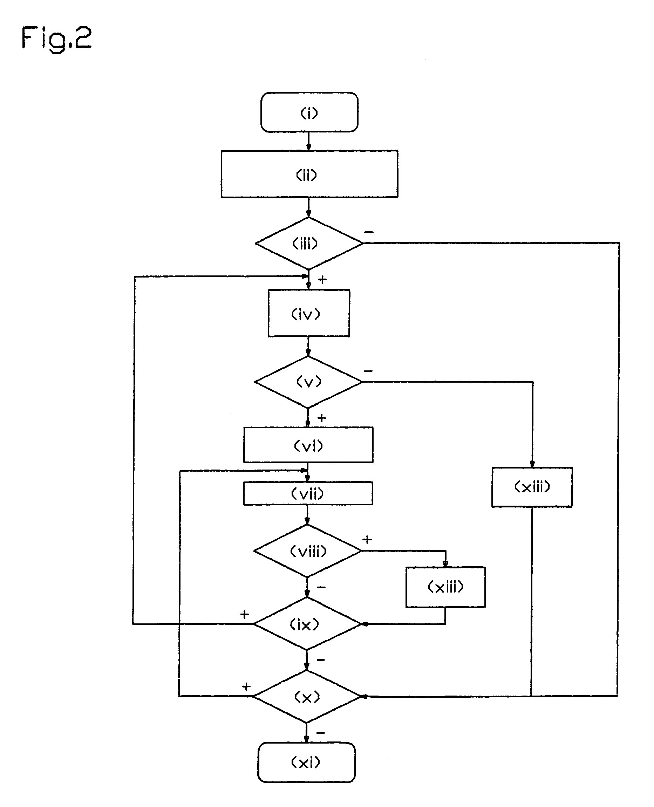

Weitere Ausgestaltungen, Merkmale und Vorteile der vorliegenden Erfindung werden nachstehend anhand des durch die Figuren 1 und 2 veranschaulichten Ausführungsbeispiels näher erläutert.

Es zeigt:
- Fig. 1: ein Ausführungsbeispiel eines Informationssystems gemäß der vorliegenden Erfindung, in schematischer Prinzipdarstellung; und
- Fig. 2: ein Ausführungsbeispiel eines Verfahrens zum Betreiben einer dem Informationssystem aus Fig. 1 zugeordneten Empfangseinheit, in schematischer Prinzipdarstellung.

### Bester Weg zur Ausführung der Erfindung

In Figur 1 ist ein Ausführungsbeispiel eines Informationssystems gemäß der vorliegenden Erfindung in schematischer Prinzipdarstellung abgebildet, wobei dieses Informationssystem 100 als Navigationssystem ausgebildet ist.

Das Navigationssystem ist in einem (in den Figuren 1 und 2 aus Gründen der Übersichtlichkeit nicht dargestellten) Fahrzeug installiert und leitet den Führer des Fahrzeugs einfach, schnell und sicher an einen gewünschten Zielort, ohne daß der Führer des Fahrzeugs vorher aufwendig eine Route planen und entsprechendes Kartenmaterial erwerben bzw. studieren muß.

Hierzu liegen entsprechende, beispielsweise auf Karten, Landkarten oder Straßenkarten basierende Navigationsdaten im Informationssystem 100 - etwa auf CD-ROM (= Compact Disc Read-Only Memory) gespeichert - vor. Das Informationssystem 100 nutzt beispielsweise GPS (= Global Positioning System), um den momentanen Standort des Fahrzeugs festzustellen und entsprechende Anweisungen zu berechnen, die zu einem vorbestimmten Ziel führen.

In diesem Zusammenhang beinhalten die Navigationsdaten Informationen über Straßen und Wege für Fahrzeuge; hierbei kommen im Informationssystem 100 entsprechende Algorithmen zur Routenberechnung zum Einsatz, die aus der Vorgabe eines Ausgangspunkts und eines Zielpunkts zusammen mit den gespeicherten Navigationsdaten eine optimale Route zur Fahrt vom Ausgangspunkt zum Zielpunkt errechnen. Derartige Algorithmen zur Routenberechnung stützen sich beispielsweise auf sogenannte Bestwege-Algorithmen, die aus der Graphentheorie bekannt sind und an die besonderen Anforderungen für den Einsatz in autarken, beispielsweise fortbewegungsmittelgebundenen Informationssystemen 100 angepaßt werden.

Das Informationssystem 100 gemäß Figur 1 weist nun als sogenannte Subsysteme im wesentlichen eine digitalisierte Straßenkarte, eine als Rechenmodul ausgebildete Prozessoreinheit 70 zur Fahrtroutenberechnung, eine Positionsbestimmungseinheit 20 zum Bestimmen der Position des Fahrzeugs sowie zum Ermitteln von Positionsdaten, eine (System-) Verwaltungseinheit 50 zum Verwalten der Positionsdaten und der Bewegungsdaten sowie der eingegebenen Daten und Informationen, eine Sensoreinheit 30 zum Erkennen der Bewegungen des Fahrzeugs sowie zum Ermitteln der Bewegungsdaten des Fahrzeugs und eine Eingabeeinheit 40 zum manuellen und akustischen Eingeben von Daten und Informationen durch den Führer des Fahrzeugs sowie eine Ausgabeeinheit 80 zum Ausgeben sowie zum optischen und akustischen Vermitteln der Reisedaten und Verkehrsinformationen als Schnittstellen für die Bedienung des Informationssystems 100 auf.

Zusätzlich werden teilweise Verkehrsdaten und -informationen verarbeitet, etwa um Verkehrsstörungen zu umfahren; hierbei wird dem Führer des Fahrzeugs über optische und akustische Fahrhinweise mitgeteilt, in welche Fahrtrichtung zu fahren ist, um nach den voreingestellten Routenoptionen optimal, das heißt schnellstmöglich und mit maximaler Sicherheit an den Zielpunkt zu gelangen.

Des weiteren besteht für das anhand Figur 1 veranschaulichte Ausführungsbeispiel des Informationssystems 100 die Möglichkeit, Daten und Informationen eines Reiseführers von einem Datenträger, beispielsweise von einer Compact Disc (CD), zu lesen. Um den Benutzer, das heißt den Führer des Fahrzeugs hierbei nicht mit allen Daten und Informationen zu belasten, ist eine der Prozessoreinheit 70 und der Ausgabeeinheit 80 vorgeschaltete Filtereinheit 60 angeordnet, die dem Führer des Fahrzeugs die vorliegenden Daten und Informationen in Abhängigkeit vom Standort, vom Zielgebiet und/oder von der Thematik in einer geeigneten selektiven Form zur Auswahl präsentiert. Der Führer des Fahrzeugs kann sich dann vom Informationssystem 100 nach Auswahl eines Objekts zu diesem führen lassen.

Das anhand Figur 1 veranschaulichte Ausführungsbeispiel des Informationssystems 100 zeichnet sich nun dadurch gegenüber konventionellen Informationssystemen aus, daß die Empfangseinheit 10 auch für das Empfangen von statusorientierten Daten, nämlich von auf das Wetter bezogenen Wetterdaten und -informationen, auf Basis des RDS/TMC-kodierten Übertragungsstandards ausgelegt ist.

Hierzu steht die Empfangseinheit 10 gemäß der Darstellung der Figur 1 mit einer Erfassungseinheit 12 zum automatisierten Erfassen der Wetterdaten und -informationen, wie etwa der Bewölkung, der Niederschlagsmenge, der Temperatur, der Windgeschwindigkeit oder dergleichen, in drahtloser Verbindung. Die von der Erfassungseinheit 12 erfaßten Wetterdaten und -informationen werden von einer Generierungseinheit 14 in gemäß dem Übertragungsstandard übertragbare statusorientierte Daten umgewandelt. In Korrespondenz hierzu, im speziellen zur Empfangseinheit 10, dient die Verwaltungseinheit 50 zusätzlich auch zum Verwalten der Wetterdaten und -informationen; mit der Prozessoreinheit 70 können die Wetterdaten und -informationen dann verarbeitet und ausgewertet werden.

In bezug auf den RDS/TMC-kodierten Übertragungsstandard ist nun zu berücksichtigen, daß die TMC-Übertragung im RDS (RDS = Radio Data System = Radio-Daten-System) in der RDS-Gruppe 8A mit 37 verfügbaren Bits pro Gruppe erfolgt. Bei etwa sechs bis acht TMC-Gruppen pro Sekunde (in Abhängigkeit von der Belegung des RDS-Kanals) ergeben sich etwa 200 Bit pro Sekunde bis 300 Bit pro Sekunde, die für das TMC-Prinzip verfügbar sind.

Hierbei ist die kodierte TMC-Übertragung prinzipiell auch in amplitudenmodulierten Systemen (AM-Systemen) möglich, etwa auf Mittelwellen- oder Langwellensendern mit Amplitudenmodulation (AM) zum Übertragen von AM-Zusatzinformationen mit brutto etwa 200 Bit pro Sekunde. Die Übertragung erfolgt durch Phasenmodulation des Trägersignals, wobei die Datenstruktur ähnlich wie im RDS ist.

Hinsichtlich der konkreten Übertragung von Daten gemäß dem WMC-Prinzip ist - im Unterschied zum TMC-Prinzip - eine spezielle sogenannte Anwendungskennung (= AID = Application Identification) bei der EBU (= European Broadcasting Union) zu beantragen.

Des weiteren ist zu berücksichtigen, daß beim WMC-Prinzip - im Unterschied zum TMC-Prinzip (--> Gruppentyp 8A) - keine Zuordnung zu einem speziellen RDS-Gruppentyp gegeben ist. Die Suche nach einem WMC-Service wird aus diesen Gründen im Vergleich zur TMC-Suche etwas länger dauern, denn der Gruppentyp 3A mit dem Hinweis auf den WMC wird nur etwa alle fünf Sekunden ausgesendet. Dies ist jedoch nicht nachteilig, denn WMC-Meldungen sind - im Gegensatz zu TMC-Meldungen - nicht zeitkritisch.

Schließlich ist zu bedenken, daß auch das Meldungsmanagement beim WMC-Prinzip etwas komplexer wird, wenn die Vorhersage-Wettermeldungen gemäß ENV 12313-3 (--> TTI messages via traffic message coding - part 2: event and information codes for RDS-TMC) genutzt werden soll, weil dann die Meldungen mit unterschiedlicher Vorhersagedauer parallel in der Verwaltungseinheit 50 verwaltet werden müssen.

Im Informationssystem 100 gemäß Figur 1 sind die Wetterdaten und - informationen zunächst einmal für Anzeigezwecke im Rahmen der Ausgabeeinheit 80 nutzbar. Hierzu werden die aktuellen Temperaturen und die Wetterlage ("sonnig", "bewölkt" oder dergleichen) der verschiedenen Gebiete zunächst vom Informationssystem 100 dekodiert. Bei Informationssystemen 100 mit Kartendarstellung wird dann der Wetterlage ein entsprechendes Symbol zugeordnet und dieses Symbol an den Koordinaten der Örtlichkeiten (sogenannte "Locations") nach Starten der Funktion "Wetter-Information" in der Karte dargestellt.

Die Anzahl der angezeigten Wetterdaten und -informationen hängt in diesem Zusammenhang von der in der Empfangseinheit 10 empfangenen Datenmenge und von der Größe des jeweiligen dargestellten Kartenausschnitts ab. Hierbei können Symbole und/oder Temperaturwerte dargestellt werden. Bei Systemen ohne Kartendarstellung werden die Wetterdaten und -informationen mittels der Ausgabeeinheit 80 als Text oder als Tabelle in alphabetischer Reihenfolge dargestellt.

Zusammenfassend läßt sich also feststellen, daß die Wetterdaten und - informationen und/oder die Reisedaten und Verkehrsinformationen durch die Ausgabeeinheit 80 in erfindungswesentlicher Weise
- in Form von Text und Tabellen, insbesondere in alphabetischer Reihenfolge, und/oder
- in Form von Graphiken und Symbolen, insbesondere in Form von in mindestens eine Karte integrierten Graphiken und Symbolen,
optisch vermittelbar sind.

Eine weitere Funktion der Ausgabeeinheit 80 ist die Anzeige der Temperaturen in Grad Celsius oder in Grad Fahrenheit; dies ist über das in der Eingabeeinheit 40 implementierte Setup des Informationssystems 100 einstellbar, wobei eine Umrechnung der übertragenen Werte im Informationssystem 100, und zwar konkret in dessen Prozessoreinheit 70, vorgenommen wird, das heißt die Prozessoreinheit 70 ist in erfindungswesentlicher Weise für das Umrechnen der Temperaturdaten und -informationen von Grad Celsius in Grad Fahrenheit und umgekehrt ausgelegt.

Da nun ALERT-C die Möglichkeit bietet, für einen Ort mehrere Wetterdaten und -informationen mit unterschiedlichen Vorhersagezeiten ("aktuelle Prognose" und/oder "kurzfristige Prognose" und/oder "langfristige Prognose", das heißt erfindungswesentliche Möglichkeit der Bereitstellung aktueller Wetterdaten und -informationen und/oder kurzfristiger Wetterdaten und -informationen und/oder langfristiger Wetterdaten und -informationen durch die Ausgabeeinheit 80) darzustellen, ist neben der Anzeige der aktuellen Daten in der Ausgabeeinheit 80 auch eine detaillierte Wettervorhersage möglich. In Abhängigkeit von der jeweils im Informationssystem 100 implementierten Bedienerführung können die Vorhersagen dem Nutzer zum Beispiel durch Aufrufen weiterer Kartendarstellungen über Menüpunkte verfügbar gemacht werden.

Gemäß einem erfindungswesentlichen Merkmal ergibt sich bei kombinierten TMC-/WMC-Systemen insofern eine optimale Synergie, als dann die Dekodiereinrichtungen von TMC auch für WMC genutzt werden können. Die WMC-spezifischen Erweiterungen sind dann im Vergleich zur Gesamtkomplexität vernachlässigbar. Die Haupterweiterung der Empfangseinheit 10 des Informationssystems 100 besteht dann darin, daß, sobald eine 3A-Gruppe mit einer WMC-AID gefunden und verifiziert wird, der in dieser 3A-Gruppe angegebene Gruppentyp zusätzlich zu den 8A-Gruppen gesammelt und dekodiert wird.

Im Unterschied zu kombinierten TMC-/WMC-Systemen lassen sich sogenannte "Standalone"-WMC-Empfangseinheiten 10 auf Basis vorhandener TMC-Technologie mit wenig Entwicklungsaufwand realisieren und sind durch die oben genannten Unterschiede dann preiswert am Markt anzubieten.

In Figur 2 wird das Funktionsprinzip einer WMC-Empfangseinheit 10 gemäß der vorliegenden Erfindung skizziert. Deutlich wird hier, daß im Unterschied zu einer TMC-Empfangseinheit keine automatische Meldungsausgabe erfolgt, sondern der Meldungsbestand (= Wetterlage und Wettervorhersage) erst auf Verlangen, etwa durch Knopfdruck des Nutzers, zur Verfügung gestellt wird.

Im einzelnen erfolgt nach dem Starten (= Verfahrensschritt (i)) zunächst eine initialisierung (= Verfahrensschritt (ii)) der Empfangseinheit 10, die unter anderem ein Auslesen der LCL-Kennung oder dergleichen, ein Scannen des frequenzmodulierten Bandes und ein Suchen von Gruppentypen, nämlich von RDS-Gruppentypen wie 3A und 8A, beinhaltet.

Wird daraufhin die Empfangseinheit 10 in bezug auf den Empfang von statusorientierten Daten, nämlich von auf das Wetter bezogenen Wetterdaten und -informationen aktiviert (= Verfahrensschritt (iii)), so erfolgt eine Suche nach dem dem Empfangen von statusorientierten Daten, nämlich von auf das Wetter bezogenen Wetterdaten und -informationen, zugeordneten RDS-Gruppentyp 3A (= Verfahrensschritt (iv)); andernfalls (= "-") erfolgt eine Überprüfung, ob der "Wettermitteilungsdienst" (= WMC = Weather Message Channel) noch aktiviert ist (= Verfahrensschritt (x)).

Wenn nun der passende RDS-Gruppentyp 3A mit der zutreffenden Anwendungskennung (AID = Application Identification) nicht gefunden wird (= "-"), dann wird die WMC-Funktion deaktiviert (= Verfahrensschritt (xii)) und eine Überprüfung eingeleitet, ob der "Wettermitteilungsdienst" (= WMC = Weather Message Channel) überhaupt noch aktiviert ist (= Verfahrensschritt (x)).

Wird hingegen der passende RDS-Gruppentyp 3A mit der zutreffenden Anwendungskennung (AID = Application Identification) gefunden (= Verfahrensschritt (v)), dann wird im Display der Ausgabeeinheit 80 ein WMC-Icon oder dergleichen angezeigt (= Verfahrensschritt (vi)), woraufhin statusorientierte Meldungen, nämlich auf das Wetter bezogene Wettermeldungen gesammelt werden (= Verfahrensschritt (vii)).

Nach diesem Sammeln erfolgt dann der WMC-Abruf (= Verfahrensschritt (viii)) und im positiven Falle (= "+") ein Anzeigen der WMC-Meldungen auf dem Display der Ausgabeeinheit 80 (= Verfahrensschritt (xiii)), wobei sich hinter dieser Funktion die vorstehend dargelegte Komplexität einer Benutzerschnittstelle ("user interface") insofern verbirgt, als die Anzeige in Text, in Graphik oder in Sprache erfolgen kann.

Im negativen Falle (= "-") des Verfahrensschritts (viii) erfolgt ein Wechseln des Senders (= Verfahrensschritt (ix)). In Abhängigkeit vom Erfolg des versuchten Senderwechsels (--> "+") springt das Verfahren gemäß der vorliegenden Erfindung vor Verfahrensschritt (iv) zurück oder (--> "-") überprüft, ob der "Wettermitteilungsdienst" (= WMC = Weather Message Channel) noch aktiviert ist (= Verfahrensschritt (x)). Falls dies der Fall ist (= "+"), springt das Verfahren vor Verfahrensschritt (vii) zurück; andernfalls (= "-") wird das Verfahren beendet (= Verfahrensschritt (xi)).

Abschließend sei noch auf die erfindungswesentliche Eigenschaft hingewiesen, daß die WMC-Meldungen auch für die Dynamisierung der Routensuche genutzt werden können, wobei dies sinnvollerweise analog dem beim TMC-Prinzip eingesetzten Verfahren erfolgt. In dieser Funktion kann dann auch die Navigation selbst als "User" die Funktion "Anzeigen der WMC-Meldungen" (= Verfahrensschritt (xiii)) auslösen und erhält als Antwort die aktuelle Liste der Wettermeldungen.

### Bezugszeichenliste

- 100: Informationssystem
- 10: Empfangseinheit
- 12: Erfassungseinheit
- 14: Generierungseinheit
- 20: Positionsbestimmungseinheit
- 30: Sensoreinheit
- 40: Eingabeeinheit
- 50: Verwaltungseinheit
- 60: Filtereinheit
- 70: Prozessoreinheit
- 80: Ausgabeeinheit
- 90: Speichereinheit

## Patentansprüche

1. Informationssystem (100), aufweisend mindestens eine Empfangseinheit (10) zum Empfangen von statusorientierten, auf das Wetter bezogenen Wetterdaten und - informationen,
**dadurch gekennzeichnet,**
**dass** die Wetterdaten und -informationen mittels mindestens eines Übertragungsstandards als ODA-Applikation nach IEC 62106:2000 kodiert übertragbar sind.

2. Informationssystem (100) gemäß Anspruch 1, **dadurch gekennzeichnet, dass** die Empfangseinheit (10) mit mindestens einer Erfassungseinheit (12) zum automatisierten Erfassen der Wetterdaten und -informationen, wie etwa der Bewölkung, der Niederschlagsmenge, der Temperatur, der Windgeschwindigkeit oder dergleichen, in insbesondere drahtloser Verbindung steht.

3. Informationssystem (100) gemäß Anspruch 2, **dadurch gekennzeichnet, dass** die von der Erfassungseinheit (12) erfassten Wetterdaten und -informationen von mindestens einer Generierungseinheit (14) in gemäß dem Übertragungsstandard übertragbare statusorientierte Daten umwandelbar sind.

4. Informationssystem (100) gemäß mindestens einem der Ansprüche 1 bis 3, **dadurch gekennzeichnet, dass** der Übertragungsstandard
- durch den RDS-Standard und/oder
- durch den GSM-Standard und/oder
- durch den GPRS-Standard und/oder
- durch den UMTS-Standard und/oder
- durch den DAB-Standard
gegeben ist.

5. Informationssystem (100) gemäß mindestens einem der Ansprüche 1 bis 4, **dadurch gekennzeichnet, dass** die Wetterdaten und -informationen auf der Basis des ALERT-Standards kodiert übertragbar sind.

6. Informationssystem (100) gemäß mindestens einem der Ansprüche 1 bis 5, **dadurch gekennzeichnet,**
- **dass** die Empfangseinheit (10) als mindestens eine Rundfunkempfangseinheit ausgebildet ist und
- **dass** die kodierten Wetterdaten und -informationen mittels der Rundfunkempfangseinheit dekodierbar und ausgebbar sind.

7. Informationssystem (100) gemäß mindestens einem der Ansprüche 1 bis 6, **dadurch gekennzeichnet, dass** das Informationssystem (100) als mindestens ein einem Fortbewegungsmittel zugeordnetes Navigationssystem ausgebildet ist.

8. Informationssystem (100) gemäß Anspruch 7, **dadurch gekennzeichnet, dass** das Navigationssystem
- mindestens eine Positionsbestimmungseinheit (20)
-- zum Bestimmen der Position des Fortbewegungsmittels und
-- zum Ermitteln von Positionsdaten;
- mindestens eine Sensoreinheit (30)
-- zum Erkennen von Bewegungen des Fortbewegungsmittels und
-- zum Ermitteln von Bewegungsdaten;
- mindestens eine Eingabeeinheit (40) zum manuellen und/oder akustischen Eingeben von Daten und Informationen, insbesondere durch den Führer des Fortbewegungsmittels;
- mindestens eine Verwaltungseinheit (50) zum Verwalten der Wetterdaten und - informationen und/oder der Positionsdaten und/oder der Bewegungsdaten und/oder der eingegebenen Daten und Informationen, insbesondere zum Verwalten mindestens eines verkehrsbezogenen Ereignisses und/oder mindestens einer dem verkehrsbezogenen Ereignis zugeordneten Verkehrsmeldung;
- mindestens eine Prozessoreinheit (70)
-- zum Verarbeiten bzw. Auswerten der Wetterdaten und - informationen und/oder der Positionsdaten und/oder der Bewegungsdaten und/oder der eingegebenen Daten und Informationen sowie
-- zum Berechnen von Reisedaten und Verkehrsinformationen, insbesondere einer Fahrtroute; und
- mindestens eine Ausgabeeinheit (80) zum Ausgeben sowie zum optischen und/oder akustischen Vermitteln der Wetterdaten und - informationen und/oder der Reisedaten und Verkehrsinformationen
aufweist.

9. Informationssystem (100) gemäß Anspruch 8, **dadurch gekennzeichnet, dass** die Prozessoreinheit (70) für das Berechnen der Reisedaten und Verkehrsinformationen, insbesondere der Fahrtroute, in Abhängigkeit von den Wetterdaten und -informationen ausgelegt ist.

10. Informationssystem (100) gemäß Anspruch 8 oder 9, **dadurch gekennzeichnet, dass** die Prozessoreinheit (70) mindestens eine Speichereinheit (90) zum Abbilden eines Routennetzes, insbesondere eines Straßennetzes, aufweist.

11. Informationssystem (100) gemäß Anspruch 1 bis 7, **dadurch gekennzeichnet, dass** die Prozessoreinheit eine Speichereinheit (90) aufweist, in der die Wetterdaten und - informationen für verschiedene Vorhersagezeiträume abgelegt sind, dass diese auf der Ausgabeeinheit (80) über mindestens eine Eingabeeinheit (40) manuell und/oder akustisch jederzeit abrufbar sind.

12. Informationssystem (100) gemäß Anspruch 11, **dadurch gekennzeichnet, dass** die Prozessoreinheit eine Speichereinheit (90) aufweist, in der die aktuellen Wetterdaten und -informationen so abgelegt sind, dass der zeitliche Verlauf dieser Daten auf der Ausgabeeinheit (80) über mindestens eine Eingabeeinheit (40) manuell und/oder akustisch jederzeit abrufbar ist. ,

## Claims

1. Information system (100), having at least one reception unit (10) for receiving status-oriented, weather-related weather data and information,
**characterized**
**in that** the weather data and information can be transmitted in encoded form using at least one transmission standard as an ODA application based on IEC 62106:2000.

2. Information system (100) according to Claim 1, **characterized in that** the reception unit (10) is connected, in particular wirelessly, to at least one recording unit (12) for automatically recording the weather data and information, such as the cloud cover, the quantity of precipitation, the temperature, the wind speed or the like.

3. Information system (100) according to Claim 2, **characterized in that** the weather data and information recorded by the recording unit (12) can be converted by at least one generation unit (14) into status-oriented data which can be transmitted on the basis of the transmission standard.

4. Information system (100) according to at least one of Claims 1 to 3, **characterized in that** the transmission standard is provided
- by the RDS standard and/or
- by the GSM standard and/or
- by the GRPS standard and/or
- by the UMTS standard and/or
- by the DAB standard.

5. Information system (100) according to at least one of Claims 1 to 4, **characterized in that** the weather data and information can be transmitted in encoded form on the basis of the ALERT standard.

6. Information system (100) according to at least one of Claims 1 to 5, **characterized**
- **in that** the reception unit (10) is in the form of at least one broadcast radio reception unit, and
- **in that** the encoded weather data and information can be decoded and output by means of the broadcast radio reception unit.

7. Information system (100) according to at least one of Claims 1 to 6, **characterized in that** the information system (100) is in the form of at least one navigation system associated with a means of locomotion.

8. Information system (100) according to Claim 7, **characterized in that** the navigation system has
- at least one position-finding unit (20)
-- for finding the position of the means of locomotion and
-- for ascertaining position data;
- at least one sensor unit (30)
-- for identifying movements by the means of locomotion and
-- for ascertaining movement data;
- at least one input unit (40) for the manual and/or audio input of data and information, particularly by the driver of the means of locomotion;
- at least one management unit (50) for managing the weather data and information and/or the position data and/or the movement data and/or the input data and information, particularly for managing at least one traffic-related event and/or at least one traffic announcement associated with the traffic-related event;
- at least are processor unit (70)
-- for processing and evaluating the weather data and information and/or the position data and/or the movement data and/or the input data and information and
-- for calculating travel data and traffic information, particularly a journey route; and
- at least one output unit (80) for outputting and for visually and/or audibly conveying the weather data and information and/or the travel data and traffic information.

9. Information system (100) according to Claim 8, **characterized in that** the processor unit (70) is designed to calculate the travel data and traffic information, particularly the journey route, on the basis of the weather data and information.

10. Information system (100) according to Claim 8 or 9, **characterized in that** the processor unit (70) has at least one memory unit (90) for depicting a route network, particularly a road network.

11. Information system (100) according to Claims 1 to 7, **characterized in that** the processor unit has a memory unit (90) which stores the weather data and information for various forecast periods such that said weather data and information can be retrieved at any time manually and/or audibly on the output unit (80) using at least one input unit (40).

12. Information system (100) according to Claim 11, **characterized in that** the processor unit has a memory unit (90) which stores the current weather data and information such that the time characteristic of these data can be retrieved at any time manually and/or audibly on the output unit (80) using at least one input unit (40).

## Revendications

1. Système d'information (100), présentant au moins une unité de réception (10) destinée à recevoir des données et des informations météorologiques relatives au temps et orientées sur l'état,
**caractérisé en ce que**
les données et les informations météorologiques peuvent être transmises de façon codée selon IEC 62106:2000, à l'aide d'au moins une norme de transmission telle que l'application ODA.

2. Système d'information (100) selon la revendication 1,
**caractérisé en ce que**
l'unité de réception (10) est en particulier en liaison sans fil avec au moins une unité de détection (12) pour la détection automatisée de données et d'informations météorologiques telles que, par exemple, la nébulosité, la pluviométrie, la température, la vitesse du vent ou analogues.

3. Système d'information (100) selon la revendication 2,
**caractérisé en ce que**
les données et les informations météorologiques détectées par l'unité de détection (12) peuvent être transformées par au moins une unité de production (14) en données orientées sur l'état selon la norme de transmission.

4. Système d'information (100) selon au moins l'une quelconque des revendications 1 à 3,
**caractérisé en ce que**
la norme de transmission est donnée par
- la norme RDS et/ou
- la norme GSM et/ ou
- la norme GPRS et/ou
- la norme UMTS et/ou
- la norme DAB.

5. Système d'information (100) selon au moins l'une quelconque des revendications 1 à 4,
**caractérisé en ce que**
les données et les informations météorologiques peuvent être transmises de façon codée sur la base de la norme ALERT.

6. Système d'information (100) selon au moins l'une quelconque des revendications 1 à 5,
**caractérisé en ce que**
- l'unité de réception (10) est au moins une unité de réception radio, et
- les données et les informations météorologiques codées peuvent être décodées et délivrées par l'unité de réception radio.

7. Système d'information (100) selon au moins l'une quelconque des revendications 1 à 6,
**caractérisé en ce que**
le système d'information (100) est au moins un système de navigation associé à un véhicule.

8. Système d'information (100) selon la revendication 7,
**caractérisé en ce que**
le système de navigation présente :
- au moins une unité de localisation (20), destinée à déterminer la position du véhicule et calculer les données de position,
- au moins une unité de détection (30), destinée à reconnaître les mouvements du véhicule et calculer les données de mouvement,
- au moins une unité d'entrée (40) destinée à l'entrée manuelle et/ou acoustique de données et d'informations, en particulier, par le conducteur du véhicule,
- au moins une unité de gestion (50) destinée à gérer les données et les informations météorologiques et/ou les données de position et/ou les données de mouvement et/ou les données et les informations entrées, en particulier, destinée à gérer au moins un événement relatif à la circulation et/ou au moins une information sur le trafic associée à l'événement relatif à la circulation,
- au moins une unité à traitement intégré (70), destinée à transformer ou évaluer les données et les informations météorologiques et/ou les données de position et/ou les données de mouvement et/ou les données et les informations entrées, et à calculer les données de trajet et les informations sur le trafic, en particulier, un itinéraire de trajet, et
- au moins une unité de sortie (80) destinée à la sortie et à la transmission optique et/ou acoustique des données et des informations météorologiques et/ou des données de parcours et des informations sur le trafic.

9. Système d'information (100) selon la revendication 8,
**caractérisé en ce que**
l'unité à traitement intégré (70) est conçue pour calculer des données de trajet et des informations sur le trafic, en particulier, de l'itinéraire de trajet en fonction des données et des informations météorologiques.

10. Système d'information (100) selon la revendication 8 ou 9,
**caractérisé en ce que**
l'unité à traitement intégré (70) présente au moins une unité de mémorisation (90) destinée à représenter par une image un réseau d'itinéraires, en particulier, un réseau routier.

11. Système d'information (100) selon la revendication 1 à 7,
**caractérisé en ce que**
l'unité à traitement intégré présente une unité de mémorisation (90), dans laquelle les données et les informations météorologiques sont stockées en mémoire pour différentes périodes de prévision, et celles-ci peuvent être demandées sur l'unité de sortie (80) à tout moment manuellement et/ou acoustiquement par au moins une unité d'entrée (40).

12. Système d'information (100) selon la revendication 11,
**caractérisé en ce que**
l'unité à traitement intégré présente une unité de mémorisation (90), dans laquelle les données et les informations météorologiques actuelles sont stockées en mémoire de sorte que l'évolution temporaire de ces données sur l'unité de sortie (80) puisse être demandée à tout moment manuellement et/ou acoustiquement par au moins une unité d'entrée (40).
